# EUROPÄISCHE PATENTSCHRIFT

(11) **EP 3 265 364 B1**
(45) Veröffentlichungstag und Bekanntmachung des Hinweises auf die Patenterteilung: **23.01.2019**
(21) Anmeldenummer: 16701537.9
(22) Anmeldetag: 27.01.2016
(51) Int. Cl.: B62D 7/06, B60G 3/20, B62D 7/20

(54) **EINZELRADAUFHÄNGUNG MIT HOHEM LENKWINKEL**
INDEPENDENT SUSPENSION SYSTEM WITH A HIGH STEERING ANGLE
SUSPENSION DE ROUE INDIVIDUELLE À ANGLE DE DIRECTION ÉLEVÉ

(30) Priorität: 02.03.2015 DE 102015203632
(43) Veröffentlichungstag der Anmeldung: 10.01.2018
(73) Patentinhaber: ZF Friedrichshafen AG, 88046 Friedrichshafen (DE)
(72) Erfinder: NEU, Alexander, 88048 Friedrichshafen (DE); GILSDORF, Heinz-Joachim, 97499 Donnersdorf (DE); FÖRSTER, Christian, 52072 Aachen (DE); LEHMKUHL, Tom, 52062 Aachen (DE)
(86) Internationale Anmeldenummer: PCT/EP2016/051616
(87) Internationale Veröffentlichungsnummer: WO 2016/139014

(56) Entgegenhaltungen:
- DE-A1-102013 216 029

## Beschreibung

Die Erfindung betrifft eine Radaufhängung nach dem Oberbegriff von Anspruch 1.

Um bei gegebener Fahrwerksgeometrie den minimalen Wendekreis eines Straßenfahrzeugs zu verringern, muss der maximale Lenkwinkel vergrößert werden. Der Lenkwinkel ist aber unter anderem durch die Lenkkinematik beschränkt.

Aus der Druckschrift DE 10 2004 053 722 A1 ist ein Lenkmechanismus für Baufahrzeuge bekannt. Eine Spurstange wirkt dabei über ein viergliedriges Koppelgetriebe auf einen Radträger. Eine Starrachse oder ein Fahrzeugrahmen, der Radträger und zwei Koppelstangen bilden die Glieder des Koppelgetriebes.

Der DE 10 2013 216 029 A1, welche den Oberbegriff des unabhängigen Anspruchs offenbart, ist eine Radaufhängung zu entnehmen, bei der ein Lenkgestänge aus zwei Spurstangen gebildet ist, welche mittels eines am Federbein angeordneten Zwischenhebels miteinander gekoppelt sind. Bei einer drehfesten Verbindung des Zwischenhebels mit dem Federbein, ist das Federbein um seine Federbeinlängsachse drehbar gelagert. Alternativ kann der Zwischenhebel drehbeweglich am Federbein angeordnet sein.

Der Erfindung liegt die Aufgabe zu Grunde, eine Radaufhängung unter Umgehung der den aus dem Stand der Technik bekannten Lösungen inne wohnenden Nachteile verfügbar zu machen. Insbesondere soll bei einem Fahrzeug mit Einzelradaufhängung der minimale Wendekreis verringert werden.

Diese Aufgabe wird gelöst durch eine Radaufhängung nach Anspruch 1. Bevorzugte Weiterbildungen sind in den Unteransprüchen enthalten.

Unter einer Radaufhängung ist eine Vorrichtung zur Anbindung mindestens eines Rads an eine Fahrzeugkarosserie und/oder einem Fahrzeugrahmen zu verstehen. In der Regel erfolgt die Anbindung federbar, insbesondere bei einer Vorderachse auch lenkbar. Die Radaufhängung verbindet also den Radträger mit der Fahrzeugkarosserie und/oder dem Fahrzeugrahmen derart, dass ein in dem Radträger drehbar gelagertes Rad federbar und gegebenenfalls lenkbar ist.

Die erfindungsgemäße Radaufhängung weist mindestens einen Radträger, eine erste Koppelstange, eine zweite Koppelstange und mindestens eine Spurstange auf.

Die Spurstange ist Bestandteil eines Lenkmechanismus und dient dazu, ein Lenkmoment auf den Radträger zu übertragen. Beim Lenken vollzieht die Spurstange eine translatorische Bewegung bzw. eine Verschiebung mindestens teilweise in Fahrzeugquerrichtung. Beim Lenken gibt es also eine Bewegungskomponente der Spurstange, die in Fahrzeugquerrichtung verläuft. Unter Fahrzeugquerrichtung ist eine Richtung orthogonal zur Fahrzeuglängsrichtung zu verstehen, die zu dem horizontal verläuft. Die Fahrzeuglängsrichtung stimmt mit der Fahrtrichtung beim Geradeausfahren überein.

Unter einer Koppelstange ist eine Stange zu verstehen, die mit zwei weiteren Komponenten gelenkig verbunden ist.

Eine gelenkige Verbindung zweier Komponenten bezeichnet eine Verbindung der beiden Komponenten mittels eines Gelenks derart, dass die beiden Komponenten um mindestens eine Drehachse relativ zueinander verdreht werden können. Es sind also gelenkige Verbindungen um genau eine Drehachse, um genau zwei Drehachsen und um genau drei Drehachsen möglich. Eine gelenkige Verbindung lässt keine translatorische Bewegung der beiden Komponenten relativ zueinander zu.

Die erste Koppelstange und die zweite Koppelstange der erfindungsgemäßen Radaufhängung sind gelenkig miteinander verbunden.

Weiterhin sind die zweite Koppelstange und der Radträger gelenkig miteinander verbunden. Der Radträger kann zu diesem Zweck einen Spurhebel ausbilden, wobei die zweite Koppelstange und der Spurhebel gelenkig miteinander verbunden sind. Zwischen dem Spurhebel und dem übrigen Radträger besteht eine starre, das heißt keine Relativbewegungen zulassende Verbindung. Insbesondere kann der Radträger einschließlich des Spurhebels einstückig ausgeführt sein.

Die Übertragung des Lenkmoments auf den Radträger durch die Spurstange erfolgt nicht direkt, sondern über die erste Koppelstange. Entsprechend ist die Spurstange ausgebildet, das Lenkmoment auf die erste Koppelstange aufzubringen. Von der ersten Koppelstange wird das Lenkmoment über die zweite Koppelstange auf den Radträger übertragen. Die erste Koppelstange und die zweite Koppelstange befinden sich also in einem Drehmomentfluss des Lenkmoments von der Spurstange zu dem Radträger und sind an der Übertragung des Lenkmoments beteiligt.

Die Radaufhängung ist als Einzelradaufhängung ausgebildet. Erfindungsgemäß weist die Radaufhängung entsprechend mindestens einen Fahrwerkslenker auf, der im Gegensatz zu einer Starrachse gelenkig in der Fahrzeugkarosserie oder dem Fahrzeugrahmen gelagert ist. Der Fahrwerkslenker ist also schwenk- oder drehbar in der Fahrzeugkarosserie oder dem Fahrzeugrahmen gelagert. Zwischen dem Fahrwerkslenker und der Fahrzeugkarosserie oder dem Fahrzeugrahmen besteht dabei kein translatorischer und mindestens ein rotatorischer Freiheitsgrad. Es kann also genau ein rotatorischer Freiheitsgrad bestehen, genau zwei rotatorische Freiheitsgrade oder genau drei rotatorische Freiheitsgrade. Weiterhin ist der Fahrwerkslenker gelenkig mit dem Radträger verbunden.

Die erste Koppelstange ist gelenkig in dem Fahrwerkslenker gelagert. Der Fahrwerkslenker und die erste Koppelstange sind also gelenkig miteinander verbunden.

Somit bilden die erste Koppelstange, die zweite Koppelstange, der Fahrwerkslenker und der Radträger jeweils ein Glied eines viergliedrigen Koppelgetriebes. Die gelenkige Anbindung der ersten Koppelstange an den Fahrwerkslenker ermöglicht es, ein derartiges Koppelgetriebe als Lenkmechanismus einer Einzelradaufhängung zu verwenden.

Die Spurstange kann entweder direkt oder indirekt mit der ersten Koppelstange verbunden sein. In einer bevorzugten Weiterbildung der Radaufhängung besteht zwischen der Spurstange und der ersten Koppelstange eine direkte Verbindung. Die Spurstange und die erste Koppelstange sind dann gelenkig miteinander verbunden. Dies bedeutet, dass eine erste Hälfte eines Gelenks starr mit der Spurstange verbunden ist und eine zweite Hälfte desselben Gelenks starr mit der ersten Koppelstange. Über das genannte Gelenk wird also die erste Koppelstange mit dem Lenkmoment beaufschlagt. Die Spurstange wiederum beaufschlagt das Gelenk mit dem Lenkmoment.

Alternativ ist die Radaufhängung derart weitergebildet, dass die Spurstange über ein Hebelelement an die erste Koppelstange angebunden ist. Das Hebelelement und die erste Koppelstange sind zu diesem Zweck starr miteinander verbunden. Insbesondere kann eine einstückige Komponente vorgesehen sein, die das Hebelelement und die erste Koppelstange ausbildet. Mit dem Hebelelement ist die Spurstange gelenkig verbunden. Die Spurstange überträgt also das Lenkmoment auf das Hebelelement. Durch die starre Verbindung zwischen dem Hebelelement und der ersten Koppelstange wird infolge dessen die erste Koppelstange mit dem Lenkmoment beaufschlagt.

Die Verdrehung der ersten Koppelstange gegenüber dem Fahrwerkslenker erfolgt um einen ersten Angelpunkt. Der erste Angelpunkt ist während der Verdrehung relativ zu der ersten Koppelstange und zu dem Fahrwerkslenker feststehend. Insbesondere kann es sich bei dem ersten Angelpunkt um einen Punkt einer Drehachse handeln. Sind die Koppelstange und der Fahrwerkslenker mittels eines Kugelgelenks verbunden, bildet ein Kugelmittelpunkt dieses Gelenks den ersten Angelpunkt.

Die gelenkige Verbindung zwischen dem Fahrwerkslenker und dem Radträger lässt eine Verdrehung der beiden Komponenten gegeneinander um einen zweiten Angelpunkt zu. Die zweite Koppelstange und der Radträger sind gegeneinander um einen dritten Angelpunkt verdrehbar.

Die Spurstange kann in einem ersten Angriffspunkt ein Lenkmoment auf die erste Koppelstange aufbringen. Bei dem Angriffspunkt handelt es sich um einen Angelpunkt, um den die Spurstange gegenüber der ersten Koppelstange verdreht werden kann. Der erste Angriffspunkt ist also relativ zu der Spurstange und zu der ersten Koppelstange während der Verdrehung unbeweglich. Eine Kraft, welche die Spurstange auf die erste Koppelstange aufbringt, und die das auf die erste Koppelstange wirkende Lenkmoment hervorruft, verläuft durch den ersten Angriffspunkt.

Das in der ersten Koppelstange wirkende Lenkmoment wird in einem zweiten Angriffspunkt auf die zweite Koppelstange übertragen. Auch der zweite Angriffspunkt ist während einer Verdrehung der ersten Koppelstange und der zweiten Koppelstange relativ zu der ersten Koppelstange und der zweiten Koppelstange unbeweglich. Eine Kraft, die mit der Übertragung des Lenkmoments von der ersten Koppelstange auf die zweite Koppelstange einhergeht, verläuft durch den zweiten Angriffspunkt.

Der erste Angelpunkt, der zweite Angelpunkt, der dritte Angelpunkt und der zweite Angriffspunkt sind so angeordnet, dass sie die Ecken eines Vierecks bilden. Insbesondere sind der erste Angelpunkt, der zweite Angelpunkt, der dritte Angelpunkt und der zweite Angriffspunkt paarweise voneinander beabstandet.

Eine Lenkkinematik, die in Hinblick auf einen hohen Lenkwinkel besonders vorteilhaft ist, lässt sich erzielen, wenn ein Abstand zwischen dem ersten Angelpunkt und dem ersten Angriffspunkt geringer ist, als ein Abstand zwischen dem ersten Angelpunkt und dem zweiten Angriffspunkt. Die Lenkstange bringt also das Lenkmoment auf einen ersten, in dem Fahrwerkslenker verschwenkbar gelagerten Hebel auf, der kürzer ist, als ein zweiter, in dem Fahrwerkslenker verschwenkbar gelagerter Hebel, der das Lenkmoment auf die zweite Koppelstange überträgt.

Vorzugsweise sind der erste Angelpunkt, der erste Angriffspunkt und der zweite Angriffspunkt entlang einer Geraden angeordnet.

Die erste Koppelstange weist in einer besonders bevorzugten Weiterbildung zwischen dem ersten Angelpunkt und dem ersten Angriffspunkt eine Krümmung auf. Eine Krümmung bezeichnet eine lokale Abweichung einer Kurve von einer Geraden. Die erste Koppelstange verläuft also zwischen dem ersten Angelpunkt und dem ersten Angriffspunkt entlang einer Kurve, die von einer Geraden abweicht. Bei einem derartigen Verlauf der ersten Koppelstange lassen sich hohe Lenkwinkel realisieren, ohne dass die erste Koppelstange mit dem Radträger bzw. dem Spurhebel kollidiert.

Darüber hinaus ist die Radaufhängung mit mindestens einem Dreiecksquerlenker weitergebildet, der als der oben genannte Fahrwerkslenker fungiert. Darüber hinaus kann ein weiterer Dreiecksquerlenker zur Führung des Radträgers vorgesehen sein.

Die Radaufhängung kann insbesondere spiegelsymmetrisch gegenüber einer vertikal ausgerichteten, mittig in Fahrzeuglängsrichtung verlaufenden Spiegelebene ausgebildet sein.

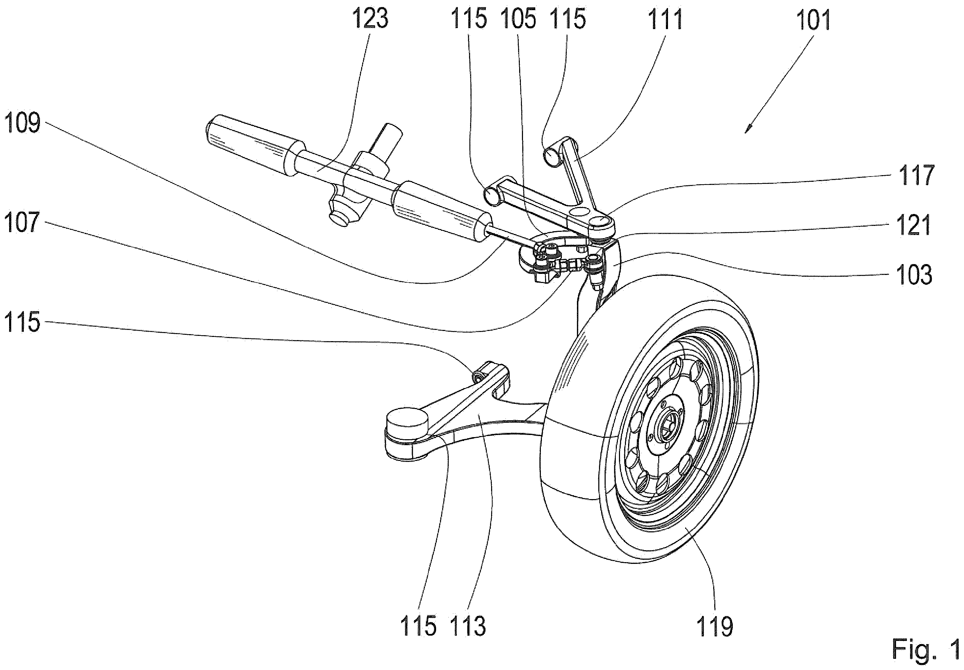

Ein bevorzugtes Ausführungsbeispiel ist in Figur 1 dargestellt. Gleiche Bezugsziffern kennzeichnen dabei gleiche oder funktionsgleiche Merkmale.

Im Einzelnen zeigt:
Fig. 1 eine Radaufhängung.

Die Radaufhängung 101 gemäß Figur 1 weist einen Radträger 103, eine erste Koppelstange 105, eine zweite Koppelstange 107 und eine Spurstange 109 auf. Ein erster Dreiecksquerlenker 111 und ein zweiter Dreiecksquerlenker 113 führen den Radträger 103 feder- und lenkbar. Hierzu sind der erste Dreiecksquerlenker 111 und der zweite Dreiecksquerlenker 113 jeweils in zwei Buchsen 115 verschwenkbar in einer Fahrzeugkarosserie fixiert.

Jeweils ein Kugelgelenk 117 verbindet den ersten Dreiecksquerlenker 111 und den zweiten Dreiecksquerlenker 113 mit dem Radträger 103. Durch die beiden Kugelgelenke 117 verläuft eine Lenkachse, um die der Radträger 103 verschwenkt werden kann.

Ein Rad 119 ist drehbar in dem Radträger 103 gelagert.

Ein Teil des Radträgers 103 ist als ein Spurhebel 121 ausgestaltet. Der Spurhebel 121 bildet zusammen mit der ersten Koppelstange 105, der zweiten Koppelstange 107, den ersten Dreiecksquerlenker 111, der Spurstange 109 und einem Lenkgetriebe 123 einen Lenkmechanismus.

Mittels des Lenkgetriebes 123 kann die Spurstange 109 translatorisch quer zur Fahrtrichtung verschoben werden. Die Spurstange 109 wirkt nicht, wie üblich, direkt auf den Radträger 103, sondern betätigt ein durch die erste Koppelstange 105, die zweite Koppelstange 107 den ersten Dreiecksquerlenker 111 und den Spurhebel 121 gebildetes Koppelgetriebe. Auf diese Weise lassen sich hohe Lenkeinschläge des Rades 119 realisieren.

### Bezugszeichen

- 101: Radaufhängung
- 103: Radträger
- 105: erste Koppelstange
- 107: zweite Koppelstange
- 109: Spurstange
- 111: erster Dreiecksquerlenker
- 113: zweiter Dreiecksquerlenker
- 115: Buchse
- 117: Kugelgelenk
- 119: Rad
- 121: Spurhebel
- 123: Lenkgetriebe

## Patentansprüche

1. Radaufhängung (101) mit mindestens einem Radträger (103), einer ersten Koppelstange (105), einer zweiten Koppelstange (107) und mindestens einer Spurstange (109); wobei
die erste Koppelstange (105) und die zweite Koppelstange (107) gelenkig miteinander verbunden sind; wobei
die zweite Koppelstange (107) und der Radträger (103) gelenkig miteinander verbunden sind; wobei
die Spurstange (109) ausgebildet ist, ein Lenkmoment auf die erste Koppelstange (105) aufzubringen; wobei
das Lenkmoment von der ersten Koppelstange (105) über die zweite Koppelstange (107) auf den Radträger (103) übertragen wird; mit
mindestens einen Fahrwerkslenker (111); wobei
der Fahrwerkslenker (111) gelenkig in einer Fahrzeugkarosserie oder einem Fahrzeugrahmen gelagert und gelenkig mit dem Radträger (103) verbunden ist; und wobei
der Fahrwerkslenker (111) und die erste Koppelstange (105) gelenkig miteinander verbunden sind; **gekennzeichnet durch**
mindestens einen Dreiecksquerlenker (111); wobei
der Dreiecksquerlenker (111) den Fahrwerkslenker ausbildet.

2. Radaufhängung (101) nach Anspruch 1; **dadurch gekennzeichnet, dass**
die Spurstange (109) und die erste Koppelstange (105) gelenkig miteinander verbunden sind.

3. Radaufhängung (101) nach Anspruch 1; **gekennzeichnet durch**
ein Hebelelement; wobei
das Hebelelement und die erste Koppelstange (105) starr miteinander verbunden sind; und wobei
die Spurstange (109) und das Hebelelement gelenkig miteinander verbunden sind.

4. Radaufhängung nach einem der vorhergehenden Ansprüche; **dadurch gekennzeichnet, dass**
die erste Koppelstange (105) gegenüber dem Fahrwerkslenker (111) um einen Angelpunkt verdreht werden kann; wobei
die Spurstange (109) in einem ersten Angriffspunkt ein Lenkmoment auf die erste Koppelstange (105) aufbringen kann; wobei
die erste Koppelstange (105) das Lenkmoment in einem zweiten Angriffspunkt auf die zweite Koppelstange (107) überträgt; und wobei
ein Abstand zwischen dem Angelpunkt und dem ersten Angriffspunkt geringer ist, als ein Abstand zwischen dem Angelpunkt und dem zweiten Angriffspunkt.

5. Radaufhängung (101) nach den Ansprüchen 2 und 4; **dadurch gekennzeichnet, dass** die erste Koppelstange (105) zwischen dem Angelpunkt und dem ersten Angriffspunkt eine Krümmung aufweist.

## Claims

1. Wheel suspension system (101) having at least one wheel support (103), a first coupling rod (105), a second coupling rod (107) and at least one track rod (109) ;
the first coupling rod (105) and the second coupling rod (107) being connected to one another in an articulated manner;
the second coupling rod (107) and the wheel support (103) being connected to one another in an articulated manner;
the track rod (109) being configured to apply a steering torque to the first coupling rod (105);
the steering torque being transmitted from the first coupling rod (105) via the second coupling rod (107) to the wheel support (103); having
at least one chassis link (111);
the chassis link (111) being mounted in an articulated manner in a vehicle body or a vehicle frame and being connected to the wheel support (103) in an articulated manner; and
the chassis link (111) and the first coupling rod (105) being connected to one another in an articulated manner; **characterized by**
at least one wishbone (111);
the wishbone (111) configuring the chassis link.

2. Wheel suspension system (101) according to Claim 1; **characterized in that**
the track rod (109) and the first coupling rod (105) are connected to one another in an articulated manner.

3. Wheel suspension system (101) according to Claim 1; **characterized by**
a lever element;
the lever element and the first coupling rod (105) being connected to one another rigidly; and
the track rod (109) and the lever element being connected to one another in an articulated manner.

4. Wheel suspension system according to one of the preceding claims; **characterized in that**
the first coupling rod (105) can be rotated about a pivot point with respect to the chassis link (111);
it being possible for the track rod (109) to apply a steering torque to the first coupling rod (105) at a first point of action;
the first coupling rod (105) transmitting the steering torque to the second coupling rod (107) at a second point of action; and
a spacing between the pivot point and the first point of action being smaller than a spacing between the pivot point and the second point of action.

5. Wheel suspension system (101) according to Claims 2 and 4; **characterized in that** the first coupling rod (105) has a curvature between the pivot point and the first point of action.

## Revendications

1. Suspension de roue (101) comprenant au moins un support de roue (103), une première barre de liaison (105), une deuxième barre de liaison (107) et au moins une barre d'accouplement (109) ; dans laquelle
la première barre de liaison (105) et la deuxième barre de liaison (107) sont reliées l'une à l'autre de manière articulée; dans laquelle
la deuxième barre de liaison (107) et le support de roue (103) sont reliés l'un à l'autre de manière articulée ; dans laquelle
la barre d'accouplement (109) est conçue pour appliquer un couple de braquage à la première barre de liaison (105) ; dans laquelle
le couple de braquage est transmis de la première barre de liaison (105) au support de roue (103) par le biais de la deuxième barre de liaison (107) ; comprenant
au moins un bras de suspension (111) ; dans laquelle
le bras de suspension (111) est monté de manière articulée dans une carrosserie de véhicule ou dans un châssis de véhicule et est relié de manière articulée au support de roue (103) ; et dans laquelle
le bras de suspension (111) et la première barre de liaison (105) sont reliés l'un à l'autre de manière articulée ; **caractérisée par** au moins un bras triangulaire transversal (111) ; le bras triangulaire transversal (111) formant le bras de suspension.

2. Suspension de roue (101) selon la revendication 1 ; **caractérisée en ce que** la barre d'accouplement (109) et la première barre de liaison (105) sont reliées l'une à l'autre de manière articulée.

3. Suspension de roue (101) selon la revendication 1 ; **caractérisée par**
un élément levier ; dans laquelle
l'élément levier et la première barre de liaison (105) sont reliés rigidement l'un à l'autre ; et dans laquelle
la barre d'accouplement (109) et l'élément levier sont reliés l'un à l'autre de manière articulée.

4. Suspension de roue selon l'une quelconque des revendications précédentes ; **caractérisée en ce que**
la première barre de liaison (105) peut être tournée par rapport au bras de suspension (111) autour d'un point de pivotement ; dans laquelle
la barre d'accouplement (109) peut appliquer un couple de braquage à la première barre de liaison (105) en un premier point d'application ; dans laquelle
la première barre de liaison (105) transmet le couple de braquage à la deuxième barre de liaison (107) en un deuxième point d'application ; et dans laquelle
une distance entre le point de pivotement et le premier point d'application est inférieure à une distance entre le point de pivotement et le deuxième point d'application.

5. Suspension de roue (101) selon les revendications 2 et 4 ; **caractérisée en ce que** la première barre de liaison (105) présente une courbure entre le point de pivotement et le premier point d'application.
